# EUROPEAN PATENT SPECIFICATION

(11) **EP 3 693 626 B1**
(45) Date of publication and mention of the grant of the patent: **30.08.2023**
(21) Application number: 18859133.3
(22) Date of filing: 20.09.2018
(51) Int. Cl.: F16C 33/46, F16C 33/66, F16C 9/04, F16C 19/26, F16C 19/46, F16C 33/54

(54) **RETAINER FOR ROLLING BEARING**
HALTER FÜR WÄLZLAGER
ÉLÉMENT DE RETENUE POUR PALIER À ROULEMENT

(30) Priority: 20.09.2017 JP 2017179655
(43) Date of publication of application: 12.08.2020
(73) Proprietor: NTN Corporation, Osaka-shi, Osaka 550-0003 (JP)
(72) Inventor: OHASHI, Izumi, Iwata-shi Shizuoka 438-8510 (JP)
(74) Representative: Bockhorni & Brüntjen Partnerschaft Patentanwälte mbB
(86) International application number: PCT/JP2018/034781
(87) International publication number: WO 2019/059268

(56) References cited:
- WO-A1-2010/018663
- DE-A1-102008 026 562
- DE-A1-102014 214 332
- DE-U- 1 725 627
- DE-U- 1 963 209
- FR-A- 1 234 778
- GB-A- 919 983
- JP-A- H07 167 135
- JP-A- H07 259 865
- JP-A- H08 270 658
- JP-A- 2004 011 689
- JP-A- 2007 064 305
- JP-A- 2010 286 117
- US-A1- 2010 322 549

## Description

### Technical Field

The present invention relates to roller bearing cages.

### Background Art

As described in Japanese Unexamined Patent Publication No. H08-312650 (Patent Literature 1), a roller bearing cage produced by punching a plurality of pockets in a steel strip and forming the resultant steel strip into a cylindrical shape is conventionally known in the art.

For example, a V-type or M-type cage described in Japanese Unexamined Patent Publication No. 2007-64305 (Patent Literature 2) or in DE 10 2008 026562 A1 (Patent Literature 3) is known as what is called a welded cage produced by welding both ends of a steel strip rolled into a cylindrical shape. The welded cage described in Patent Literature 2 includes a pair of annular portions, cage bars connecting the annular portions, and pockets each formed between the cage bars adjacent to each other in the circumferential direction. The radially outer surfaces of the annular portions become smooth cylindrical surfaces by a first grinding process. At this time, the ends of the cage bars are not continuous due to the pocket located therebetween and do not form a cylindrical surface. In a second grinding process, the radially outer surfaces of the pair of annular portions and both ends of the pluraliyt of cage bars are ground so as to form a common cylindrical surface.

A roller bearing including the cage described in Patent Literature 2 is inserted into an engagement hole formed in the center of a pinion gear of a planetary gear set and supports the pinion gear so as to be rotatable relative to a pinion shaft. Since the pinion gear revolves about a sun gear, the cage is subjected to the centrifugal force due to the revolving motion. According to the cage described in Patent Literature 2, the contact area between the inner peripheral surface of the engagement hole and the outer peripheral surface of the cage is increased. Accordingly, the surface pressure on the contact portion is reduced, whereby the life of the planetary gear set is increased.

In the V-type cage, the pair of annular portions and the cage bars have the same thickness. In the M-type cage or other types of cages, the middle part of each cage bar is thinner than the pair of annular portions.

### Citation List

### Patent Literatures

Patent Literature 1: Japanese Unexamined Patent Publication No. H08-312650
Patent Literature 2: Japanese Unexamined Patent Publication No. 2007-64305
Patent Literature 3: DE 10 2008 026562 A1

### Summary of Invention

### Technical Problem

A roller bearing that is used in a joint portion between a crankshaft of an engine and a connecting rod (the big end of the connecting rod) is the same as the above roller bearing that is used in the planetary gear set in that the inner ring raceway of the roller bearing revolves about the crankshaft and therefore the cage is subjected to the centrifugal force due to the revolving motion. However, the roller bearing that is used in the big end of the connecting rod is used in higher temperature environments than the roller bearing that is used in the planetary gear set. Moreover, since an automobile engine rotates at higher speeds than rotating elements of an automatic transmission, the roller bearing that is used in the big end of the connecting rod is subjected to a larger centrifugal force than the roller bearing that is used in the planetary gear set. The cage of the roller bearing is therefore pressed against a radially inner surface located radially outside the roller bearing.

The roller bearing that is used in the crankshaft of the engine is therefore required to have improved durability. That is, in the V-type or M-type cage described in Patent Literature 2, the pair of annular portions have a radially outer guide surface and the cage bars do not have a radially outer guide surface. The V-type or M-type cage may therefore be unstable when subjected to a centrifugal force while revolving. In the M-type cage described in Patent Literature 2, the middle part of each cage bar is thinner than the pair of annular portions. Accordingly, there is room for improvement in rigidity.

In view of the above, it is an object of the present invention to improve rigidity of a welded cage for roller bearings.

### Solution to Problem

A roller bearing cage of the present invention is a cage that is formed by bending a steel strip having a plurality of pockets for accommodating rollers into a ring shape and joining the ring-shaped steel strip and that includes: a first ring portion and a second ring portion which form a pair and a plurality of cage bars connecting the first ring portion and the second ring portion and extending in an axial direction of the cage. The roller bearing cage is characterized by the following. The first ring portion has a first radially outer guide surface so that the cage is guided along its outer periphery. The second ring portion has a second radially outer guide surface so that the cage is guided along its outer periphery. The cage bar has a third radially outer guide surface formed in its middle part so that the cage is guided along its outer periphery. The cage bar has a first recess and a first roller guide surface at a position located closer to the first ring portion than the middle part is, the first recess being recessed toward a radially inner side of the cage with respect to the first radially outer guide surface and the third radially outer guide surface, and the first roller guide surface protruding toward the radially inner side with respect to a radially inner surface of the first ring portion. The cage bar further has a second recess and a second roller guide surface at a position located closer to the second ring portion than the middle part is, the second recess being recessed toward the radially inner side of the cage with respect to the second radially outer guide surface and the third radially outer guide surface, and the second roller guide surface protruding toward the radially inner side with respect to a radially inner surface of the second ring portion.

According to this roller bearing cage of the present invention, the first radially outer guide surface is formed on the first ring portion, the second radially outer guide surface is formed on the second ring portion, and the third radially outer guide surface is formed on the cage bar so that the cage is guided along its outer periphery. The cage is thus guided along its three radially outer surfaces located away from each other in the axial direction of the cage. The cage thus has higher rigidity than cages that are guided along their two radially outer surfaces.

The roller bearing cage of the present invention has the first recess and the second recess which are recessed with respect to these radially outer guide surfaces and which are adjacent to the pockets located on both sides of the cage bar. Accordingly, when the cage is subjected to a centrifugal force, lubricating oil that is present radially outside the cage can be introduced from the first recess and the second recess into the pockets. Moreover, since the first roller guide surface protrudes toward the radially inner side with respect to the radially inner surface of the first ring portion and the second roller guide surface protrudes toward the radially inner side with respect to the radially inner surface of the second ring portion, the cage bar has a portion having a thickness equal to or larger than that of the first ring portion and the second ring portion. Accordingly, the cage bar has sufficient rigidity even through it has the recesses. The cage thus has sufficient rigidity.

In a preferred embodiment of the present invention, the cage bar of the roller bearing cage further has a radially outer-side roller stopper protrusion that is formed at a position located on a radially outer side with respect to the first roller guide surface and the second roller guide surface and that protrudes into the pocket. According to this embodiment, the rollers placed in the pockets can be prevented from coming off from the pockets toward the radially outer side. The cage bar may further have a radially inner-side roller stopper protrusion that is formed at a position located on the radially inner side of the cage with respect to the first roller guide surface and the second roller guide surface and that protrudes into the pocket. The cage bar may not have such a radially inner-side roller stopper protrusion.

The shape of the cage bar is not particularly limited. According to the present invention, a radial thickness of the cage bar of the roller bearing cage is equal to or larger than that of the first ring portion and is equal to or larger than that of the second ring portion. According to this embodiment, the cage bar has sufficient rigidity. In another embodiment, the radial thickness of a part of the cage bar is smaller than that of the first ring portion and is smaller than that of the second ring portion.

In a preferred embodiment of the present invention, the cage bar further has, in its side surface, a wall surface that is recessed toward one side in a circumferential direction with respect to the first roller guide surface and the second roller guide surface. According to this embodiment, the side surface of the cage has steps. Lubricating oil thus flows between this side surface and the roller to the radially outer surface of the cage with improved flowability.

### Advantageous Effects of Invention

The present invention thus improves rigidity of a welded cage for roller bearings.

### Brief Description of Drawings

[FIG. 1] FIG. 1 is an overall sectional view of a caged roller bearing that is mounted on a crankpin of a motorcycle engine, as viewed in the axial direction of a cage.
[FIG. 2] FIG. 2 is a perspective view of a cage that is an embodiment of the present invention.
[FIG. 3] FIG. 3 is a sectional view of the cage taken along a plane including the axis of the cage.
[FIG. 4] FIG. 4 is a sectional view showing a crankpin and a cage of a caged roller bearing mounted on the crankpin, taken along a plane common to the axis of the crankpin and the axis of a crank journal.
[FIG. 5] FIG. 5 is a sectional view of a cage that is a modification of the present invention.
[FIG. 6] FIG. 6 is a sectional view of the cage of the modification taken along a plane common to the axis of a crankpin and the axis of a crank journal.
[FIG. 7] FIG. 7 is a longitudinal section of a motorcycle engine using a caged roller bearing according to an embodiment of the present invention in a big end of a connecting rod.

### Description of Embodiments

An embodiment of the present invention will be described below with reference to the accompanying drawings. A caged roller bearing according to the present invention is used in a revolving portion and is mounted in, e.g., a part of a motorcycle engine where a connecting rod and a crankshaft are connected to each other so as to be rotatable relative to each other. Alternatively, the caged roller bearing according to the present invention is mounted in, e.g., a planetary gear set, which is a component of an automatic transmission for automobiles, to support a pinion gear, which rotates while revolving about a sun gear, such that the pinon gear is rotatable relative to a carrier.

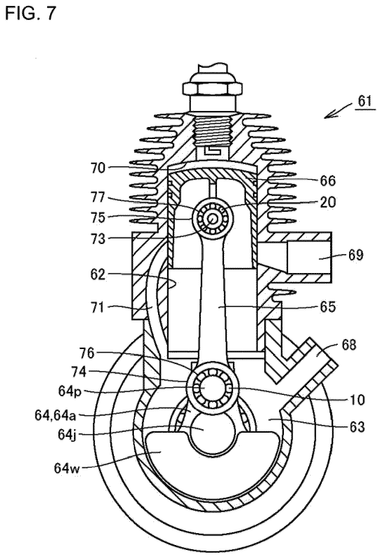

FIG. 7 is a longitudinal section of a motorcycle engine using a caged roller bearing according to an embodiment of the present invention in a big end of a connecting rod. Referring to FIG. 7, a motorcycle engine 61 includes a cylinder 62, a crank chamber 63, a crankshaft 64, a piston 66, a connecting rod 65 connecting the crankshaft 64 and the piston 66, an intake port 68 connecting to the crank chamber 63, a combustion chamber 70, an exhaust port 69 connecting to the combustion chamber 70, and an intake passage 71 connecting the crank chamber 63 and the combustion chamber 70.

The piston 66 reciprocates linearly along the cylinder 62. A mixture of air, gasoline, and lubricating oil is fed through the intake port 68 into the crank chamber 63. As the piston 66 moves in the vertical direction, the mixture thus fed into the crank chamber 63 is then guided through the intake passage 71 into the combustion chamber 70 located above the cylinder 62 and is burned in the combustion chamber 70. Exhaust gas resulting from the combustion of the mixture is discharged through the exhaust port 69 to the outside of the combustion chamber 70.

The crankshaft 64 includes a crankpin 64p, a crank arm 64a, a counterweight 64w, and a crank journal 64j. The crankshaft 64 rotates about the crank journal 64j to output the rotational motion to the outside of the motorcycle engine 61. The counterweight 64w balances the rotation of the crankshaft 64.

The connecting rod 65 is in the shape of a straight rod extending in the vertical direction in FIG. 7 and has a big end 74 at its lower one end and a small end 75 at its upper end. The crankpin 64p is passed through a through hole 76 formed in the big end 74 of the connecting rod 65. A caged roller bearing 10 that is the present invention is disposed in an annular space formed by the radially inner surface of the through hole 76 and the radially outer surface of the crankpin 64p. The crankshaft 64 is thus connected to the connecting rod 65 so as to be rotatable relative to the connecting rod 65.

The small end 75 has a through hole 77. A shaft 73 disposed across the piston 66 and extending perpendicularly to the direction of the linear reciprocating motion of the piston 66 is passed through the through hole 77. The caged roller bearing 20 that is the present invention is disposed in an annular space formed by the radially inner surface of the through hole 77 and the radially outer surface of the shaft 73. The piston 66 is thus connected to the connecting rod 65 so as to be rotatable relative to the connecting rod 65. The connecting rod 65 converts the linear reciprocating motion of the piston 66 into rotational motion of the crankshaft 64.

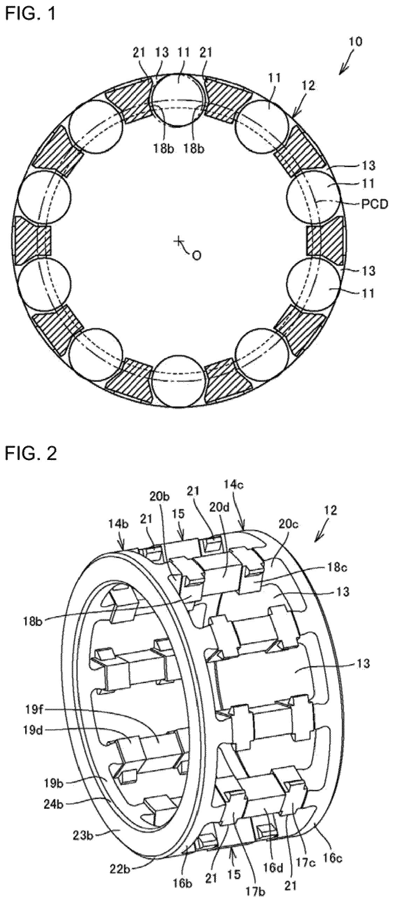

FIG. 1 is an overall sectional view of the caged roller bearing that is mounted in the motorcycle engine shown in FIG. 7, as viewed in the axial direction of a cage. FIG. 2 is a perspective view of the cage of the caged roller bearing shown in FIG. 1. In order to facilitate understanding of the invention, the roller placed in the pocket and in contact with first and second roller stopper protrusions and first and second roller guide surfaces is shown in phantom in FIG. 1. The roller PCD is shown by a long dashed short dashed line in FIG. 1.

The caged roller bearing 10 is a roller bearing comprised of a plurality of rollers 11 and a cage 12 retaining the plurality of rollers 11. The plurality of rollers 11 are needle rollers and are accommodated in a plurality of pockets 13 formed in the cage 12. The rollers 11 are not limited to the needle rollers and may be cylindrical rollers. In the following description, the "axial direction" refers to the direction along the axis (central axis) O of the caged roller bearing 10, the "radial direction" refers to the direction perpendicular to the axis O, and the "circumferential direction" refers to the direction along an arc about the axis O.

The cage 12 includes a pair of ring portions 14b, 14c and a plurality of cage bars 15 connecting the pair of ring portions 14b, 14c so as to form the plurality of pockets 13 accommodating the plurality of rollers 11. The centers of the pair of ring portions 14b, 14c form the axis O of the cage 12.

In the following description, the radially outer surface refers to the surface facing toward the radially outer side of the cage 12, and the radially inner surface refers to the surface facing toward the radially inner side of the cage 12. The radial direction refers to the radial direction of the cage 12, the circumferential direction refers to the circumferential direction about the axis O, the radially outer side refers to the side farther from the axis O as viewed from the described member, the radially inner side refers to the side closer to the axis O as viewed from the described member, one end refers to the end located on one side along the axis O, and the other end refers to the end located on the other side along the axis O.

The cage bars 15 extend parallel to the axis O. The plurality of cage bars 15 are located at intervals in the circumferential direction. Each cage bar 15 is integrally connected at its one end to one ring portion, namely the first ring portion 14b, and is integrally connected at the other end to the other ring portion, namely the second ring portion 14c. The cage bars 15 extend substantially parallel to the axial direction of the cage 12 along the axis O.

The cage 12 is guided along its outer periphery and is in surface contact with the radially inner surface (the through hole 76, see FIG. 7) of the big end 74 of the connecting rod 65. The cage 12 thus has three or more radially outer guide surfaces that are separated from each other in the direction of the axis O. Specifically, the radially outer surface of the first ring portion 14b forms a first radially outer guide surface 16b. The radially outer surface of the second ring portion 14c forms a second radially outer guide surface 16c. The radially outer surface of a middle part of each cage bar 15 forms a third radially outer guide surface 16d. The first radially outer guide surface 16b and the second radially outer guide surface 16c extend along the entire circumference about the axis O. The third radially outer guide surface 16d is formed in the middle part of each cage bar 15. The third radially outer guide surfaces 16d adjacent to each other in the circumferential direction are therefore separated from each other by the pocket 13.

The first radially outer guide surface 16b is also formed in one end of each cage bar 15. The second radially outer guide surface 16c is also formed in the other end of each cage bar 15. All the radially outer guide surfaces including the first radially outer guide surface 16b, the second radially outer guide surface 16c, and the third radially outer guide surfaces 16d form a common cylindrical surface. The first radially outer guide surface 16b, the second radially outer guide surface 16c, and the third radially outer guide surfaces 16d are flush with each other.

When the caged roller bearing 10 is subjected to a centrifugal force perpendicular to the axis O, the first radially outer guide surface 16b, the second radially outer guide surface 16c, and the third radially outer guide surface 16d simultaneously surface contact the big end 74. The contact area between the cage 12 and the through hole 76 is thus increased, and the surface pressure can be reduced even when the caged roller bearing 10 is subjected to a large centrifugal force. Durability of the cage 12 is thus improved. Moreover, since the cage 12 stably contacts the big end 74 at three different positions in the direction of the axis O, this configuration solves the problem of insufficient rigidity of the cage 12.

An end face 23b of the first ring portion 14b is one end face of the cage 12. An end face 23c of the second ring portion 14c is the other end face of the cage 12. A chamfer 22b is formed between the end face 23b and the first radially outer guide surface 16b. A chamfer 24b is formed between the end face 23b and a radially inner surface 19b of the first ring portion 14b. A chamfer 22c is formed between the end face 23c and the second radially outer guide surface 16c. A chamfer 24c is formed between the end face 23c and a radially inner surface 19c of the second ring portion 14c.

Each cage bar 15 of the cage 12 includes a first recess 17b, a second recess 17c, first roller guide surfaces 18b, and second roller guide surfaces 18c in addition to the third radially outer guide surface 16d.

The first recess 17b, the second recess 17c, and the third radially outer guide surface 16d are formed on the radially outer side of each cage bar 15. The first recess 17b and the second recess 17c are recessed toward the radially inner side with respect to the third radially outer guide surface 16d. The first recess 17b is formed at a position located closer to the first ring portion 14b than the middle part of the cage bar 15 is. The first recess 17b extends like a groove in the circumferential direction and adjoins the pockets 13, 13 on its both sides which are adjacent to each other with the cage bar 15 therebetween. The second recess 17c is formed at a position located closer to the second ring portion 14c than the middle part of the cage bar 15 is. The second recess 17c extends like a groove in the circumferential direction and adjoins the pockets 13, 13 on its both sides which are adjacent to each other with the cage bar 15 therebetween.

The first recesses 17b and the pockets 13 are alternately and successively located in the circumferential direction such that the pockets 13, 13 located adjacent to each other in the circumferential direction communicate with each other. Lubricating oil can thus be introduced from the outside of the cage 12 into the pockets 13. The bottom surface of the first recess 17b is a flat surface extending parallel to the axis O of the cage 12. The side surfaces of the first recess 17b need only be steps, and their shapes are not particularly limited. The same applies to the second recess 17c.

The bottom surface of the first recess 17b and the first radially outer guide surface 16b which are adjacent to each other in the direction of the axis O are not continuous with each other, and a step forming the side surface of the first recess 17b is formed at the boundary between the bottom surface of the first recess 17b and the first radially outer guide surface 16b. The bottom surface of the first recess 17b and the third radially outer guide surface 16d which are adjacent to each other in the direction of the axis O are not continuous with each other, and a step forming the side surface of the first recess 17b is formed at the boundary between the bottom surface of the first recess 17b and the third radially outer guide surface 16d. The bottom surface of the second recess 17c and the third radially outer guide surface 16d which are adjacent to each other in the direction of the axis O are not continuous with each other, and a step forming the side surface of the second recess 17c is formed at the boundary between the bottom surface of the second recess 17c and the third radially outer guide surface 16d. The bottom surface of the second recess 17c and the second radially outer guide surface 16c which are adjacent to each other in the direction of the axis O are not continuous with each other, and a step forming the side surface of the second recess 17c is formed at the boundary between the bottom surface of the second recess 17c and the second radially outer guide surface 16c.

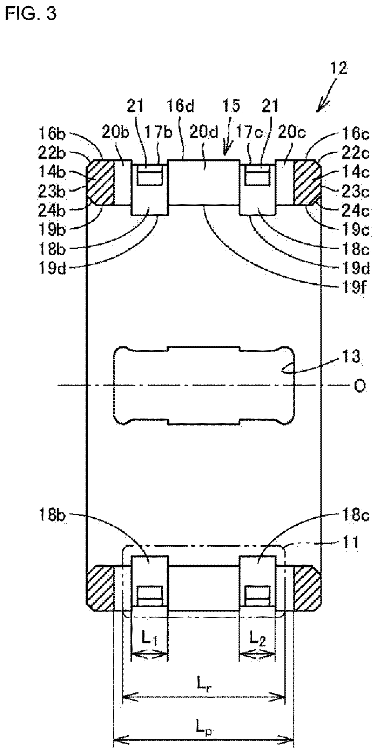

As shown in FIG. 2, the first roller guide surface 18b faces the pocket 13. As shown in FIG. 3, the first roller guide surface 18b protrudes toward the radially inner side with respect to the radially inner surface 19b of the first ring portion 14b. As shown in FIG. 1, the first roller guide surfaces 18b are pocket wall surfaces and are in pairs such that the first roller guide surfaces 18b of each pair are separated from each other in the circumferential direction with the pocket 13 therebetween. As shown by phantom line in FIG. 1, the rolling surface of the roller 11 contacts the first roller guide surface 18b. The first roller guide surface 18b thus guides the roller 11 such that the roller 11 can roll thereon. The second roller guide surface 18c faces the pocket 13 as shown in FIG. 2 and protrudes toward the radially inner side with respect to the radially inner surface 19c of the second ring portion 14c as shown in FIG. 3. Like the first roller guide surface 18b, the second roller guide surface 18c also contacts the rolling surface of the roller 11 and guides the roller 11 such that the roller 11 can roll thereon. The amount by which the roller guide surfaces 18b, 18c protrude is larger than the amount by which the recesses 17b, 17c are recessed. The first roller guide surface 18b and the second roller guide surface 18c are flat surfaces.

FIG. 3 is a sectional view of the cage taken along a plane including the axis O. In order to avoid complexity of the figure, some pockets are not shown in FIG. 3. The first roller guide surface 18b is located closer to the first ring portion 14b than the middle part of the cage bar 15 in the direction of the axis O is. The position of the first roller guide surface 18b in the direction of the axis O overlaps the position of the first recess 17b in the direction of the axis O. In the present embodiment, the position of the first recess 17b in the direction of the axis O is the same as the position of the first roller guide surface 18b in the direction of the axis O.

The second roller guide surface 18c is located closer to the second ring portion 14c than the middle part of the cage bar 15 in the direction of the axis O is. The position of the second roller guide surface 18c in the direction of the axis O overlaps the position of the second recess 17c in the direction of the axis O. In the present embodiment, the position of the second recess 17c in the direction of the axis O is the same as the position of the second roller guide surface 18c in the direction of the axis O.

The cage bar 15 has, at its one end in the direction of the axis O, the same bore diameter dimension as that of the radially inner surface 19b of the first ring portion 14b and has, at the other end in the direction of the axis O, the same bore diameter dimension as that of the radially inner surface 19c of the second ring portion 14c. The radially inner surface 19f of the middle part of the cage bar 15 in the direction of the axis O also has the same bore diameter dimension as that of the radially inner surfaces 19b, 19c. The cage bar 15 has radially inner surfaces 19d between its one end in the direction of the axis O and its middle part in the direction of the axis O and between the other end in the direction of the axis O and the middle part in the direction of the axis O, and the radially inner surfaces 19d protrude inward in the radial direction with respect to the radially inner surfaces 19b, 19c, 19f.

The radially inner surface 19f is recessed with respect to the radially inner surfaces 19d located on its both sides and is adjacent to the pockets 13, 13 on both sides of the cage bar 15. Since each cage bar 15 has the radially inner surface 19f, the radially inner surfaces 19f are located at intervals in the circumferential direction of the cage 12. Lubricating oil thus flows along the radially inner surface 19f and is supplied to the pockets 13, 13 located adjacent to the radially inner surface 19f in the circumferential direction.

The radius of the radially inner surface 19d of the cage bar 15 is smaller than the radius of the radially inner surface 19b of the first ring portion 14b and the radius of the radially inner surface 19c of the second ring portion 14c. The first roller guide surface 18b located closer to the middle than the one end of the cage bar 15 extends from a position radially outside the radially inner surface 19b of the first ring portion 14b to a position radially inside the radially inner surface 19b of the first ring portion 14b. The second roller guide surface 18c located closer to the middle than the other end of the cage bar 15 extends from a position radially outside the radially inner surface 19c of the second ring portion 14c to a position radially inside the radially inner surface 19c of the second ring portion 14c. The interval between the opposing first roller guide surfaces 18b, 18b decreases from their radially outer side toward their radially inner side.

The cage bar 15 has a portion having the same radial thickness as that of the first ring portion 14b and the second ring portion 14c and a portion having a larger radial thickness than that of the first ring portion 14b and the second ring portion 14c. In the present embodiment, the portion of the cage bar 15 which has a larger radial thickness than that of the first ring portion 14b and the second ring portion 14c is a portion where the first roller guide surface 18b and the second roller guide surface 18c are formed. The cage 12 is therefore more rigid than conventional M-type cages produced from a steel strip having a uniform thickness. In the conventional M-type cages, cage bars have a smaller radial thickness than ring portions. Accordingly, the cage 12 is more rigid than the conventional M-type cages having an M-shaped section (or V-type cages having a V-shaped section). The cage 12 thus has rigidity similar to that of machined cages formed by machining a thick steel pipe.

Each cage bar 15 further has a first wall surface 20b, a second wall surface 20c, and a third wall surface 20d which face the pocket 13. The first to third wall surfaces 20b to 20d are formed on both side surfaces on one side in the circumferential direction and the other side in the circumferential direction of each cage bar 15. The first wall surface 20b is formed on the one end of the cage bar 15. The second wall surface 20c is formed on the other end of the cage bar 15. The third wall surface 20d is formed on the middle part of the cage bar 15. The first roller guide surface 18b is located between the first wall surface 20b and the third wall surface 20d. The second roller guide surface 18c is located between the second wall surface 20c and the third wall surface 20d. The first to third wall surfaces 20b to 20d are recessed toward the one side in the circumferential direction (such a side that the circumferential thickness of the cage bar 15 is reduced) with respect to the first roller guide surface 18b and the second roller guide surface 18c. The side surfaces of the cage bar 15 thus have steps between the wall surfaces 20b to 20d and the roller guide surfaces 18b, 18c. Accordingly, lubricating oil flows to the radially outer surface of the cage 12 with improved flowability.

The first roller guide surface 18b is located closer to the first ring portion 14b than the middle part of the cage bar 15 is. The position of the first roller guide surface 18b in the direction of the axis O overlaps the position of the first recess 17b in the direction of the axis O. In the present embodiment, the position of the first recess 17b in the direction of the axis O is the same as the position of the first roller guide surface 18b in the direction of the axis O.

The cage bar 15 has a radially outer-side roller stopper protrusion 21 on its radially outer side. In the present embodiment, the cage bar 15 has radially outer-side roller stopper protrusions 21 on its one end and the other end. The radially outer-side roller stopper protrusion 21 on the one end of the cage bar 15 is adjacent to the first recess 17b and the first roller guide surface 18b and protrudes into the pocket 13. The radially outer-side roller stopper protrusion 21 on the one end of the cage bar 15 is formed so that its position overlaps the position of the first roller guide surface 18b in the direction of the axis O, and is separated from the first wall surface 20b and the third wall surface 20d. The radially outer-side roller stopper protrusion 21 on the other end of the cage bar 15 is adjacent to the second recess 17c and the second roller guide surface 18c and protrudes into the pocket 13. The radially outer-side roller stopper protrusion 21 on the other end of the cage bar 15 is formed so that its position overlaps the position of the second roller guide surface 18c in the direction of the axis O, and is separated from the second wall surface 20c and the third wall surface 20d.

As shown in FIG. 2, the radially outer-side roller stopper protrusions 21 are formed in pairs on both sides in the circumferential direction of each pocket 13 such that the radially outer-side roller stopper protrusions 21, 21 of each pair protrude toward each other. The interval between the radially outer-side roller stopper protrusions 21, 21 of each pair is smaller than the diameter of the roller 11. The roller 11 is thus restrained from coming off from the pocket 13 toward the radially outer side.

In the present embodiment, the cage bar 15 has no radially inner-side roller stopper protrusion. As described above, the radial thickness of the cage bar 15 of the present embodiment is equal to or larger than the radial thickness of the ring portions 14b, 14c. In the production process of the cage 12, the sectional height of the cage bar 15 is made smaller than that in M-type welded cages in order to make it easier to roll a steel strip into a cylindrical shape. Specifically, the radially inner surface of the cage 12 is located close to the pitch circle (PCD) of the rollers 11. In other words, the radial thickness of the cage 12 is smaller than the outside diameter of the roller 11. Accordingly, even if the cage bar 15 has radially inner-side roller stopper protrusions, the roller 11 cannot be sufficiently prevented from coming off from the pocket 13 toward the radially inner side. The roller 11 is therefore held in the pocket 13 such that it can come off from the pocket 13 toward the radially inner side.

Referring to FIG. 3, the sum L₁ + L₂ of the dimension L₁ of the first roller guide surface 18b in the direction of the axis O and the dimension L₂ of the second roller guide surface 18c in the direction of the axis O is in the range of 10% or more and 40% or less of the actual length Lᵣ of the roller 11. This configuration reduces skew of the rollers 11. The sum L₁ + L₂ of the dimension L₁ of the first recess 17b in the direction of the axis O and the dimension L₂ of the second recess 17c in the direction of the axis O is in the range of 10% or more and 40% or less of the length Lₚ of the pocket 13. This configuration allows a sufficient amount of lubricating oil to be introduced from the first recess 17b and the second recess 17c into the pocket 13. If the sum L₁ + L₂ of the dimension L₁ of the first roller guide surface 18b in the direction of the axis O and the dimension L₂ of the second roller guide surface 18c in the direction of the axis O is smaller than 10% of the actual length Lᵣ of the roller 11, the first roller guide surface 18b and the second roller guide surface 18c are less effective as roller guide surfaces, and the roller stopper protrusions formed adjacent to the first roller guide surface 18b and the second roller guide surface 18c have a smaller length in the direction of the axis O and therefore are not able to sufficiently retain the roller 11. If the sum L₁ + L₂ of the dimension L₁ of the first roller guide surface 18b in the direction of the axis O and the dimension L₂ of the second roller guide surface 18c in the direction of the axis O is larger than 40% of the actual length Lᵣ of the roller 11, the radially outer guide surfaces 16b to 16d has a smaller axial length and therefore the contact surface pressure between the outer ring raceway (in this example, the radially inner surface of the big end 74) and the cage 12 is increased.

A production process of the cage that is the present embodiment will be described below.

The cage 12 is a welded cage and is produced by cutting a steel strip with a constant width into a predetermined length, rolling (curving) the steel strip into a ring shape (cylindrical shape), and joining (in this example, welding) both ends of the ring shape (cylindrical shape). First, a steel strip, which is a plate material for the cage 12, is prepared. The steel strip is passed between a pair of rollers to roll the steel strip. By this rolling process, ridges are formed at three positions, namely both ends and the middle part in the lateral direction, of one surface of the steel strip, and grooves are formed at two positions between these ridges on the one surface of the steel strip. Moreover, a ridge is formed in the middle part in the lateral direction of the other surface of the steel strip so as to protrude with respect to both edges in the lateral direction of the other surface of the steel strip. In this rolling process, the thickness of the middle part in the lateral direction of the steel strip is made equal to or larger than that of both edges in the lateral direction of the steel strip. The outer peripheral surfaces of the pair of rollers have an uneven shape corresponding to the shapes of the ridges and grooves of the steel strip. In this rolling process, not only the outer and radially inner corners of the first ring portion 14b are chamfered but also the outer and radially inner corners of the second ring portion 14c are chamfered.

The steel strip thus formed to have a predetermined sectional shape by this rolling process is subjected to a pocket punching process of forming pockets for retaining rollers. The pocket punching process is performed by moving a punch with a punching blade in the thickness direction of the steel strip and punching the steel strip. By the pocket punching process, cage bars are simultaneously formed between every adjacent ones of the pockets. The grooves in the one surfaces of the cage bars are thus divided by the pocket, so that each cage bar has the first recess 17b and the second recess 17c. The punch has an uneven shape corresponding to the shapes of the first wall surface 20b, the first roller guide surface 18b, the second wall surface 20c, the second roller guide surface 18c, and the third wall surface 20d.

Next, a protrusion forming process is performed. Specifically, with the other surface of the cage bar being supported by a die, a punch is pressed against the first recess 17b and the second recess 17c in the one surface of the cage bar, and parts of the pocket wall surface are plastically deformed to protrude into the pocket. The radially outer-side roller stopper protrusions 21 are thus formed. An example of the protrusion forming process is an ironing process in which the corner between the first recess 17b and the pocket wall surface is ironed from the one surface toward the other. Another example of the protrusion forming process is a swaging process in which a punch is pressed into the first recess 17b so that the pocket wall surface protrudes into the pocket. The thickness of the steel strip is as described above. That is, the thickness of the cage bar including the middle part in the lateral direction of the steel strip is equal to or larger than the thickness of both ends in the lateral direction of the steel strip.

Thereafter, a cutting process is performed in which the steel strip is cut to a predetermined length, namely the circumferential length of the cage 12. A bending process is then performed in which the steel strip thus cut to the predetermined length is bent into a cylindrical shape. By the bending process, the pocket side surfaces facing parallel to each other with the pocket interposed therebetween are tilted such that the distance between the radially inner ends of the pocket side surfaces is smaller than that between the radially outer ends of the pocket side surfaces.

Subsequently, a welding process is performed in which both ends of the bent steel strip are joined. A pair of ring portions are thus formed. The radially outer surface of each cage bear still has the same shape as that before the bending process.

A grinding process is then performed in which the radially outer surface of the joined cylindrical cage 12 is ground. By the grinding process, the radially outer surface of the first ring portion 14b and the radially outer surface of the second ring portion 14c, each of which is continuous in the circumferential direction, and the radially outer surface of the middle part of each cage bar 15 which is not continuous in the circumferential direction form a common smooth cylindrical surface, namely radially outer guide surfaces (the first radially outer guide surface 16b, the second radially outer guide surface 16c, and the third radially outer guide surface 16d). The first recess 17b and the second recess 17c which face toward the radially outer side are not grounded and therefore are still recessed with respect to these radially outer guide surfaces. The bottom surfaces of the first recess 17b and the second recess 17c are still flat or approximately flat. This grinding process may be omitted.

Subsequently, carburizing, quenching, and tempering are performed as a heat treatment process. This heat treatment process improves strength of the cage 12. The heat treatment process is not limited to carburizing, quenching, and tempering. Other heat treatment processes such as carbonitriding and through hardening may be performed according to the application.

Thereafter, a cleaning process is performed, and a plating process is then performed on the surface of the cage 12. The plating process may be a copper plating process or a silver plating process. The plating process protects the surface of the welded cage and improves lubricity and thus reduces aggressiveness against the housing.

The cage 12 that is a welded cage is thus produced. The plurality of rollers 11 are placed in the pockets 13 of the cage 12. The caged roller bearing 10 is produced in this manner.

The cage 12 of the present embodiment has the first radially outer guide surface 16b formed on the first ring portion 14b, the second radially outer guide surface 16c formed on the second ring portion 14c, and the third radially outer guide surfaces 16d formed on the cage bars 15 so that the cage 12 is guided along its outer periphery. Such a cage 12 of the present embodiment is guided along its three radially outer surfaces located away from each other in the direction of the axis O. This cage 12 is therefore more stable than conventional V-type cages that are guided along its two radially outer surfaces.

The cage 12 of the present embodiment has the first recess 17b and the second recess 17c which are formed on each cage bar 15 so as to be recessed from these radially outer guide surfaces and which are adjacent to the pockets 13 located on both sides of the cage bar 15. When this cage 12 is subjected to a centrifugal force, lubricating oil that is present radially outside the cage 12 can be introduced from the first recess 17b and the second recess 17c into the pockets 13. The cage 12 can be mass produced by rolling a steel strip. Reduction in cost is thus achieved while ensuring rigidity similar to that of machined cages.

The cage 12 of the present embodiment has the radially inner surfaces 19d formed on each cage bar 15 and protruding toward the radially inner side with respect to the radially inner surface 19b of the first ring portion 14b and the radially inner surface 19c of the second ring portion 14c. The first roller guide surface 18b facing the pocket 13 overlaps the radially inner surface 19d in the direction of the axis O and extends from a position radially outside the radially inner surface 19b to a position radially inside the radially inner surface 19b.

According to the present embodiment, the radial thickness of the cage bar 15 in the radial direction of the cage 12 is equal to or larger than that of the first ring portion 14b and is equal to or larger than that of the second ring portion 14c along the entire length of the cage bar 15 from its one end to the other end. The cage bar 15 thus has sufficient rigidity.

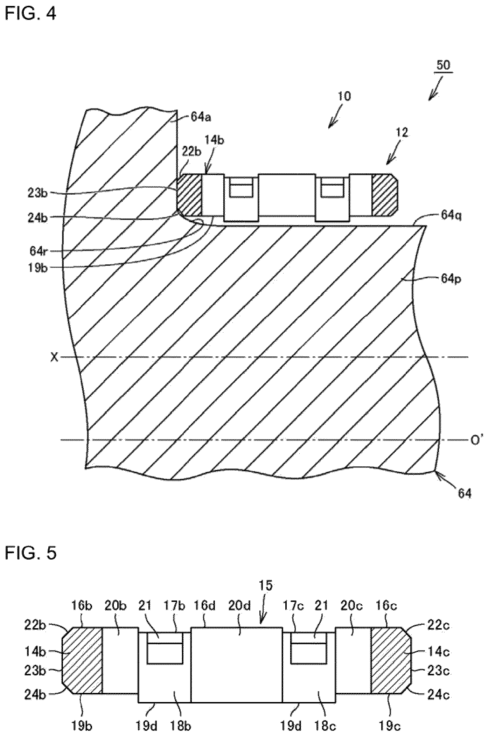

The positional relationship between the cage according to the present embodiment and the crankshaft will be described. FIG. 4 is a sectional view of a crankshaft support structure 50 including the caged roller bearing 10 according to the present embodiment and supporting the crankshaft that is a shaft. In order to avoid complexity of the figure, the rollers are not shown in FIG. 4.

FIG. 4 is a sectional view showing the crankpin 64p and the cage 12 of the caged roller bearing 10 mounted on the crankpin 64p, taken along a plane common to the axis O' of the crankpin 64p and the axis X of the crank journal. The crankshaft support structure 50 includes the crankshaft 64 and the caged roller bearing 10 rotatably supporting the crankshaft 64. The cage 12 of the caged roller bearing 10 surrounds a radially outer surface 64q of the crankpin 64p of the crankshaft 64. The axis O' of the crankpin 64p substantially matches the axis O (FIG. 3) of the cage 12. The first ring portion 14b has the chamfer 24b that is continuous with the radially inner surface 19b and the end face 23b. The chamfer 24b is in the shape of a tapered hole and has a straight line with a constant slope with respect to the axis O' in the plane including the axis O'. The chamfer 22b has a tapered shape and has a straight line with a constant slope with respect to the axis O' in the plane including the axis O'.

The surface of the crank arm 64a of the crankshaft 64 is continuous with the radially outer surface 64q via a corner 64r that is a recessed curved surface. The corner 64r has a recessed arc or a concave curve in the section of FIG. 4.

When the end face 23b of the first ring portion 14b abuts on the surface of the crank arm 64a, the chamfer 24b is located away from the corner 64r of the crankshaft 64.

According to the present embodiment, the chamfer 24b is formed in the corner between the end face 23b of the first ring portion 14b and the radially inner surface 19b, there is clearance between the chamfer 24b and the corner 64r of the crankshaft 64. This configuration reduces undesirable interference between the cage 12 and the crankshaft 64.

The radial dimension and the dimension in the direction of the axis O of the chamfer 24b may be the same as those of the chamfer 22b. Alternatively, at least one of the radial dimension and the dimension in the direction of the axis O of the chamfer 24b may be larger than that of the chamfer 22b. The clearance between the chamfer 24b and the corner 64r can be increased by increasing these dimensions of the chamfer 24b.

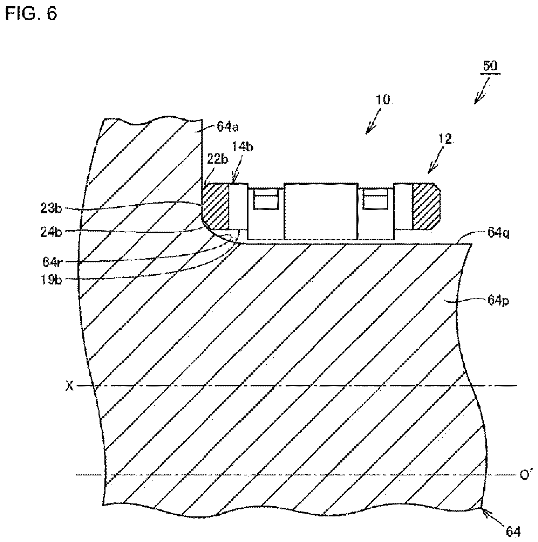

FIG. 5 is a sectional view of a cage that is a modification of the embodiment shown in FIG. 3. FIG. 6 is a sectional view illustrating the positional relationship between this modification and the crankshaft. In order to avoid complexity of the figure, the rollers are not shown in FIG. 6. In the modification of FIG. 5, the same portions as those of the above embodiment are denoted with the same reference characters as those of the above embodiment and description thereof will be omitted. The configurations different from the above embodiment will be described. A cage bar 15 of the modification does not have the radially inner surface 19f (FIG. 3). The middle part of the cage bar 15, namely the cage bar 15 other than its both ends, has a constant bore diameter (the radially inner surface 19d). The bore diameter dimension of the radially inner surface 19d is smaller than that of the radially inner surface 19b and the radially inner surface 19c. The radial thickness of the cage bar 15 is larger than that of the first ring portion 14b and the second ring portion 14c. These radially inner surfaces 19b, 19d, 19c are formed simultaneously by the rolling process described above.

The cage bar 15 also has sufficient rigidity in the cage 12 of the modification shown in FIGS. 5 and 6 as well. Accordingly, even when the cage 12 of the modification is mounted on the crankpin 64p that makes a revolving motion, the cage 12 of the modification has improved durability regardless of the centrifugal force.

A roller bearing having the cage according to the above embodiment may be used in small, general purpose engines in addition to motorcycle engines or may be used in engines that are mounted on portable machine tools. For example, the roller bearing having the cage according to the above embodiment may be used in engines that are mounted on small work machines such as a chainsaw.

Although the embodiment of the present invention is described above with reference to the figures, the present invention is not limited to the illustrated embodiment. The invention is defined by the appended claims.

### Industrial Applicability

The cage of the present invention is advantageously used in roller bearing that makes a revolving motion such as roller bearings that are mounted on crankpins of crankshafts of motorcycle engines or small, general purpose engines and roller bearings that rotatably support planetary gears of planetary gear sets.

### Reference Signs List

10: Caged Roller Bearing, 11: Roller, 12: Cage, 13: Pocket, 14b: First Ring Portion, 14c: Second Ring Portion, 15: Cage Bar, 16b: First Radially Outer Guide Surface, 16c: Second Radially Outer Guide Surface, 16d: Third Radially Outer Guide Surface, 17b: First Recess, 17c: Second Recess, 18b: First Roller Guide Surface, 18c: Second Roller Guide Surface

## Claims

1. A roller bearing cage (12) formed by bending a steel strip having a plurality of pockets (13) for accommodating rollers (11) into a ring shape and joining the ring-shaped steel strip, **characterized by** comprising:
a first ring portion (14b) and a second ring portion (14c) which form a pair and a plurality of cage bars (15) connecting the first ring portion (14b) and the second ring portion (14c) and extending in an axial direction O of the cage (12), wherein
the first ring portion (14b) has a first radially outer guide surface (16b) so that the cage (12) is guided along its outer periphery,
the second ring portion (14c) has a second radially outer guide surface (16c) so that the cage (12) is guided along its outer periphery,
the cage bar (15) has a third radially outer guide surface (16d) formed in its middle part so that the cage (12) is guided along its outer periphery,
the cage bar (15) has a first recess (17b) and a first roller guide surface (18b) at a position located closer to the first ring portion (14b) than the middle part is, the first recess (17b) being recessed toward a radially inner side of the cage (12) with respect to the first radially outer guide surface (16b) and the third radially outer guide surface (16d), and the first roller guide surface (18b) protruding toward the radially inner side with respect to a radially inner surface of the first ring portion (14b), and
the cage bar (15) further has a second recess (17c) and a second roller guide surface (18c) at a position located closer to the second ring portion (14c) than the middle part is, the second recess (17c) being recessed toward the radially inner side of the cage (12) with respect to the second radially outer guide surface (16c) and the third radially outer guide surface (16d), and the second roller guide surface (18c) protruding toward the radially inner side with respect to a radially inner surface of the second ring portion (14c), **characterized by** a radial thickness of the cage bar (15) in the radial direction of the cage (12) being equal to or larger than that of the first ring portion (14b) and being equal to or larger than that of the second ring portion (14c), and
the pitch circle of the rollers (11) being located within the radial thickness range of the cage bar (15) with regards to the whole length of the cage bar (15) from its one end to the other end in the axial direction.

2. The roller bearing cage (12) according to clam 1, wherein
the cage bar (15) further has a radially outer-side roller stopper protrusion that is formed at a position located on a radially outer side with respect to the first roller guide surface (18b) and the second roller guide surface (18c) in a radial direction of the cage (12) and that protrudes into the pocket (13).

3. The roller bearing cage (12) according to any one of claims 1 to 2, wherein
the cage bar (15) further has, in its side surface, a wall surface that is recessed in a circumferential direction with respect to the first roller guide surface (18b) and the second roller guide surface (18c).

## Patentansprüche

1. Wälzlagerkäfig (12), gebildet durch Biegen eines Stahlbandes mit mehreren Taschen (13) zum Aufnehmen von Wälzkörpern (11) in eine Ringform und Verbinden des ringförmigen Stahlbandes, umfassend
einen ersten Ringabschnitt (14b) und einen zweiten Ringabschnitt (14c), die ein Paar bilden, und mehrere Käfigstangen (15), die den ersten Ringabschnitt (14b) und den zweiten Ringabschnitt (14c) verbinden und sich in einer axialen Richtung O des Käfigs (12) erstrecken, wobei
der erste Ringabschnitt (14b) eine erste radial äußere Führungsfläche (16b) aufweist, so dass der Käfig (12) entlang seines Außenumfangs geführt wird,
der zweite Ringabschnitt (14c) eine zweite radial äußere Führungsfläche (16c) aufweist, so dass der Käfig (12) entlang seines Außenumfangs geführt wird,
die Käfigstange (15) eine dritte, radial äußere Führungsfläche (16d) aufweist, die in ihrem mittleren Teil ausgebildet ist, so dass der Käfig (12) entlang seines Außenumfangs geführt wird,
die Käfigstange (15) eine erste Vertiefung (17b) und eine erste Wälzkörperführungsfläche (18b) an einer Position aufweist, die näher an dem ersten Ringabschnitt (14b) liegt als der mittlere Teil, die erste Vertiefung (17b) in Richtung einer radial inneren Seite des Käfigs (12) in Bezug auf die erste radial äußere Führungsfläche (16b) und die dritte radial äußere Führungsfläche (16d) vertieft ist und die erste Wälzkörperführungsfläche (18b) in Richtung der radial inneren Seite in Bezug auf eine radial innere Fläche des ersten Ringabschnitts (14b) vorsteht, und
die Käfigstange (15) ferner eine zweite Vertiefung (17c) und eine zweite Wälzkörperführungsfläche (18c) an einer Position aufweist, die näher an dem zweiten Ringabschnitt (14c) liegt als der mittlere Teil, die zweite Vertiefung (17c) in Richtung der radial inneren Seite des Käfigs (12) in Bezug auf die zweite radial äußere Führungsfläche (16c) und die dritte radial äußere Führungsfläche (16d) vertieft ist und die zweite Wälzkörperführungsfläche (18c) in Richtung der radial inneren Seite in Bezug auf eine radial innere Fläche des zweiten Ringabschnitts (14c) vorsteht,
**dadurch gekennzeichnet, dass**
eine radiale Dicke des Käfigstabs (15) in der radialen Richtung des Käfigs (12), die gleich oder größer ist als die des ersten Ringabschnitts (14b) und gleich oder größer ist als die des zweiten Ringabschnitts (14c), und
der Wälzkreis der Wälzkörper (11) innerhalb des radialen Dickenbereichs der Käfigstange (15) liegt, bezogen auf die gesamte Länge der Käfigstange (15) von seinem einen Ende zu dem anderen Ende in axialer Richtung.

2. Wälzlagerkäfig (12) nach Anspruch 1, wobei
die Käfigstange (15) ferner einen radial außenseitigen Wälzkörperanschlagvorsprung aufweist, der an einer Position gebildet ist, die sich auf einer radial äußeren Seite in Bezug auf die erste Wälzkörperführungsfläche (18b) und die zweite Wälzkörperführungsfläche (18c) in einer radialen Richtung des Käfigs (12) befindet, und der in die Tasche (13) vorsteht.

3. Wälzlagerkäfig (12) nach einem der Ansprüche 1 bis 2, wobei
die Käfigstange (15) ferner in ihrer Seitenfläche eine Wandfläche aufweist, die in einer Umfangsrichtung in Bezug auf die erste Wälzkörperführungsfläche (18b) und die zweite Wälzkörperführungsfläche (18c) vertieft ist.

## Revendications

1. Cage de roulement à rouleaux (12) formée en cintrant une bande d'acier ayant une pluralité de logements (13) pour recevoir des rouleaux (11) pour obtenir une forme annulaire et assembler la bande d'acier de forme annulaire, comprenant
une première partie annulaire (14b) et une seconde partie annulaire (14c) qui forment une paire et une pluralité de barrettes de cage (15) reliant la première partie annulaire (14b) et la seconde partie annulaire (14c) et s'étendant dans une direction axiale O de la cage (12), dans laquelle
la première partie annulaire (14b) a une première surface de guidage radialement extérieure (16b) de sorte que la cage (12) est guidée le long de sa périphérie extérieure,
la seconde partie annulaire (14c) a une deuxième surface de guidage radialement extérieure (16c) de sorte que la cage (12) est guidée le long de sa périphérie extérieure,
la barrette de cage (15) a une troisième surface de guidage radialement extérieure (16d) formée dans sa partie centrale de sorte que la cage (12) est guidée le long de sa périphérie extérieure,
la barrette de cage (15) a un premier évidement (17b) et une première surface de guidage de rouleau (18b) à une position située plus près de la première partie annulaire (14b) que la partie centrale ne l'est, le premier évidement (17b) étant évidé vers un côté radialement intérieur de la cage (12) par rapport à la première surface de guidage radialement extérieure (16b) et à la troisième surface de guidage radialement extérieure (16d), et la première surface de guidage de rouleau (18b) faisant saillie vers le côté radialement intérieur par rapport à une surface radialement intérieure de la première partie annulaire (14b), et
la barrette de cage (15) a en outre un second évidement (17c) et une seconde surface de guidage de rouleau (18c) à une position située plus près de la seconde partie annulaire (14c) que la partie centrale ne l'est, le second évidement (17c) étant évidé vers le côté radialement intérieur de la cage (12) par rapport à la deuxième surface de guidage radialement extérieure (16c) et à la troisième surface de guidage radialement extérieure (16d), et la seconde surface de guidage de rouleau (18c) faisant saillie vers le côté radialement intérieur par rapport à une surface radialement intérieure de la seconde partie annulaire (14c), **caractérisée par** une épaisseur radiale de la barrette de cage (15) dans la direction radiale de la cage (12) étant égale ou supérieure à celle de la première partie annulaire (14b) et étant égale ou supérieure à celle de la seconde partie annulaire (14c), et le cercle primitif des rouleaux (11) étant situé dans les limites de la plage d'épaisseur radiale de la barrette de cage (15) en ce qui concerne la longueur totale de la barrette de cage (15) de sa première extrémité jusqu'à la seconde extrémité dans la direction radiale.

2. Cage de roulement à rouleaux (12) selon la revendication 1, dans laquelle
la barrette de cage (15) a en outre une saillie de butée de rouleau côté radialement extérieur qui est formée à une position située sur un côté radialement extérieur par rapport à la première surface de guidage de rouleau (18b) et à la seconde surface de guidage de rouleau (18c) dans une direction radiale de la cage (12) et qui fait saillie dans le logement (13).

3. Cage de roulement à rouleaux (12) selon l'une quelconque des revendications 1 à 2, dans laquelle
la barrette de cage (15) a en outre, sur sa surface latérale, une surface de paroi qui est évidée dans une direction circonférentielle par rapport à la première surface de guidage de rouleau (18b) et à la seconde surface de guidage de rouleau (18c).
